# FASCICULE DE BREVET EUROPEEN

(11) **EP 1 722 142 B1**
(45) Date de publication et mention de la délivrance du brevet: **30.07.2008**
(21) Numéro de dépôt: 06300457.6
(22) Date de dépôt: 11.05.2006
(51) Int. Cl.: F16K 37/00, F15B 19/00

(54) **Système de diagnostic du fonctionnement d'une electro-vanne embarquée à bord d'un vehicule automobile**
Diagnose- System für den Betrieb eines Elektroventils, das an Bord eines Kraftfahrzeugs eingeschifft wurde
Diagnosis system for the operation of an electro-valve embarked on board of a motor vehicle

(30) Priorité: 13.05.2005 FR 0504863
(43) Date de publication de la demande: 15.11.2006
(73) Titulaire: PEUGEOT CITROËN AUTOMOBILES S.A., 78140 Velizy Villacoublay (FR)
(72) Inventeur: Renault, Anaïs, La Plaine Saint Denis 93210 (FR); Malet, Claire, Paris 75018 (FR)
(74) Mandataire: Ménès, Catherine

(56) Documents cités:
- EP-A- 0 864 949
- EP-A- 1 070 893
- US-A- 4 378 776
- US-A- 5 422 553

## Description

La présente invention concerne un système de diagnostic du fonctionnement d'une électrovanne embarquée à bord d'un véhicule automobile.

Plus particulièrement, l'invention concerne un système de diagnostic du fonctionnement d'une telle électrovanne munie de moyens de recopie de position de celle-ci.

Ce système permet alors d'améliorer le diagnostic des pièces défectueuses au niveau par exemple d'un service après-vente d'un constructeur de véhicules automobiles et permet en particulier d'améliorer la localisation de ces défaillances.

Le système selon l'invention permet dans ce cadre, de diagnostiquer l'état de fonctionnement d'une électrovanne embarquée.

A cet effet, l'invention a pour objet un système de diagnostic du fonctionnement d'une électrovanne embarquée à bord d'un véhicule automobile et munie de moyens de recopie de position de celle-ci comme décrit en EP 1070893 , caractérisé en ce qu'il comporte des moyens d'application d'un signal de commande de test à l'électrovanne, des moyens d'acquisition du signal issu des moyens de recopie de la position de celle-ci, des moyens de détermination du temps de réaction de l'électrovanne au signal de commande de test et des moyens de comparaison de ce temps de réaction à une valeur de seuil prédéterminée pour détecter un défaut de fonctionnement de l'électrovanne en cas de franchissement de ce seuil.

Suivant d'autres caractéristiques de l'invention :
- il comporte des moyens de vérification que la tension de la batterie embarquée à bord du véhicule est correcte, que la vitesse du véhicule est nulle et que le régime de rotation du moteur est inférieur à une valeur de seuil prédéterminée, pour valider un test de l'électrovanne ;
- le signal de test est un signal en paliers comportant une succession de niveaux d'amplitude croissante et décroissante ;
- l'amplitude et la durée des paliers sont calibrables.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure et le fonctionnement d'un système de diagnostic selon l'invention ;
- la Fig.2 illustre un signal de commande de test utilisé dans un système selon l'invention ; et
- la Fig.3 représente les résultats obtenus consécutivement à l'application d'un tel signal de test.

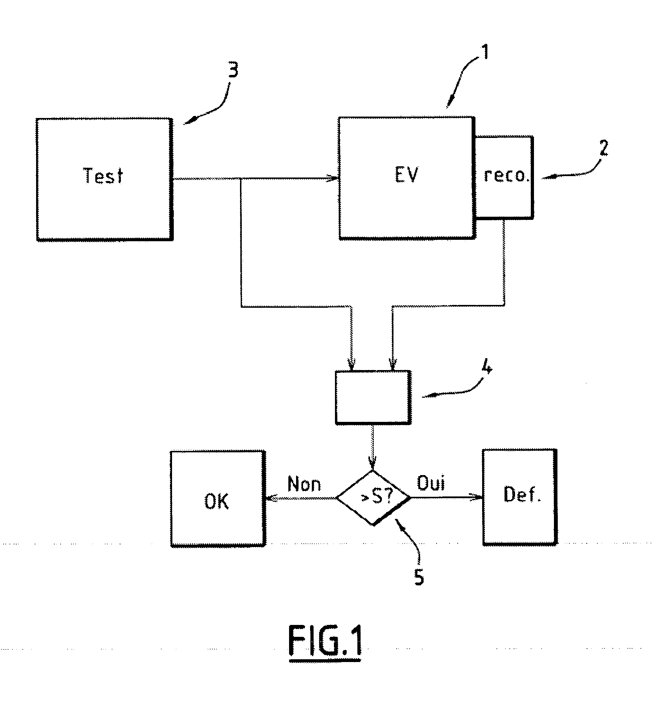

On a en effet illustré sur la figure 1, un système de diagnostic du fonctionnement d'une électrovanne embarquée à bord d'un véhicule automobile, cette électrovanne étant munie de moyens de recopie de position de celle-ci.

Sur cette figure 1, l'électrovanne est désignée par la référence générale 1 et présente n'importe quelle structure classique, cette électrovanne étant associée à des moyens de recopie de position de celle-ci désignés par la référence générale 2, formés par tout capteur de recopie classique.

En fait, un tel système comporte des moyens d'application d'un signal de commande de test de l'électrovanne, ces moyens d'application étant désignés par la référence générale 3.

Ce signal de test sera décrit plus en détail par la suite.

De plus, le système selon l'invention comporte également des moyens d'acquisition du signal issu des moyens 2 de recopie de la position de celle-ci et des moyens de détermination du temps de réaction de l'électrovanne au signal de commande de test.

Ces moyens sont désignés par la référence générale 4 sur cette figure 1 et sont donc raccordés d'une part, à la sortie des moyens 3 d'application du signal de test et d'autre part, à la sortie des moyens 2 de recopie de position pour recevoir en entrée, d'une part, le signal de commande de test et d'autre part, le signal de recopie de position de l'électrovanne.

A partir de ces deux signaux, les moyens de détermination 4 sont adaptés pour calculer le temps de réaction de l'électrovanne au signal de commande de test et ces moyens sont associés à des moyens 5 de comparaison de ce temps de réaction à une valeur de seuil prédéterminée S pour détecter un défaut de fonctionnement de l'électrovanne en cas de franchissement de ce seuil ou au contraire un fonctionnement correct de celle-ci.

En fait, un défaut de fonctionnement de l'électrovanne peut par exemple provenir d'un encrassage de cette électrovanne, ce qui a alors pour effet de réduire la vitesse de réaction de l'électrovanne. Un autre défaut se traduisant par ce type de problème, peut également provenir d'un problème de ressort du capteur de recopie qui provoque alors une dérive de ce capteur.

Ainsi, le système selon l'invention permet de déterminer la dérive d'un actionneur d'électrovanne si celle-ci est munie d'un capteur de recopie qui mesure l'ouverture de l'électrovanne et renvoie par exemple au calculateur de contrôle moteur, l'image de la position de cette électrovanne.

Le capteur de recopie permet donc de vérifier l'ouverture demandée et l'ouverture réelle effectuée et de confirmer le bon fonctionnement de cet actionneur ou non.

En effet, dans le cas d'un contrôle moteur, il existe des détections de dérive entre une consigne et une mesure et de vanne bloquée consécutivement à une réponse à des impulsions en tout ou rien de pilotage, mais il n'est pas possible de mesurer par exemple le taux d'encrassement d'une électrovanne ni la caractéristique matérielle de son temps de réaction.

En effet, aucune mesure temporelle sur la réponse à une sollicitation n'est proposée dans l'état de la technique.

Le test de l'électrovanne peut se faire à la demande d'un service après-vente du constructeur et par exemple à la mise sous tension du véhicule, dans des conditions qui peuvent être prédéterminées.

Ainsi par exemple, le système de diagnostic peut comporter des moyens de vérification de la tension de la batterie pour déterminer si celle-ci est correcte ou non, des moyens d'analyse de la vitesse du véhicule pour déterminer si celle-ci est nulle ou pas, et des moyens d'analyse du régime de rotation du moteur qui doit être inférieur à une valeur de seuil prédéterminée, pour valider ou au contraire invalider le test et protéger les opérateurs du service après-vente.

Si l'une des conditions précitées n'est pas remplie, une demande de test lancée par exemple par un opérateur du service après-vente à partir d'un outil de diagnostic extérieur au véhicule, n'est pas prise en compte et un message lui indique que le test n'a pas été effectué.

De même, si les conditions précitées ne sont plus respectées au cours d'un test, un message peut indiquer à l'opérateur que le test n'est pas validé et l'électrovanne est alors remise à sa position de repos.

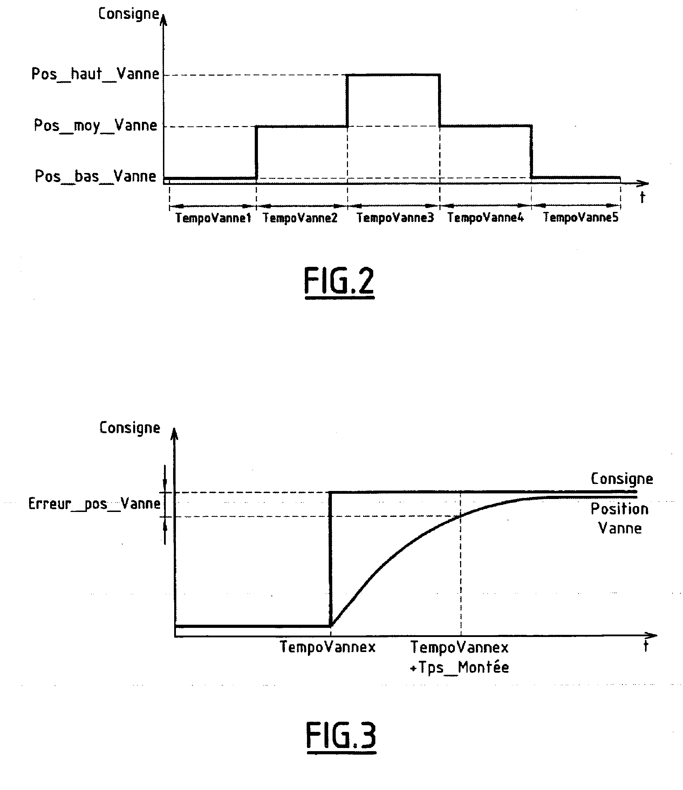

On a illustré sur la figure 2, un exemple d'un signal de commande de test.

En fait, ce signal peut par exemple être un signal en paliers, qui comporte par exemple une succession de niveaux d'amplitude croissante puis décroissante entre un niveau de pilotage de position basse de l'électrovanne, un niveau de pilotage de position intermédiaire de l'électrovanne et un niveau de position haute de pilotage de l'électrovanne.

Bien entendu, ces niveaux ont une certaine durée.

Il va de soi bien entendu, que ces durées de même que l'amplitude des niveaux, peuvent être calibrables.

Ainsi, et comme cela est illustré sur la figure 3, à chaque changement de position de consigne, il est possible d'estimer le temps de réaction, c'est-à-dire le temps que met l'électrovanne pour atteindre la position de consigne avec une certaine marge de tolérance par exemple calibrable.

Si ce temps de réaction est par exemple supérieur à une valeur de seuil, alors l'électrovanne peut être considérée comme étant défectueuse en étant par exemple encrassée.

II va de soi bien entendu que d'autres modes de réalisation encore peuvent être envisagés.

## Revendications

1. Système de diagnostic du fonctionnement d'une électrovanne (1) embarquée à bord d'un véhicule automobile et munie de moyens (2) de recopie de position de celle-ci, **caractérisé en ce qu'**il comporte des moyens (3) d'application d'un signal de commande de test à l'électrovanne (1), des moyens (4) d'acquisition du signal issu des moyens (2) de recopie de la position de celle-ci, des moyens (4) de détermination du temps de réaction de l'électrovanne au signal de commande de test et des moyens (5) de comparaison de ce temps de réaction à une valeur de seuil prédéterminée (S) pour détecter un défaut de fonctionnement de l'électrovanne en cas de franchissement de ce seuil et **en ce qu'**il comporte des moyens de vérification que la tension de la batterie embarquée à bord du véhicule est correcte, que la vitesse du véhicule est nulle et que le régime de rotation du moteur est inférieur à une valeur de seuil prédéterminée, pour valider un test de l'électrovanne (1).

2. Système selon la revendication 1, **caractérisé en ce que** le signal de test est un signal en paliers comportant une succession de niveaux d'amplitude croissante et décroissante.

3. Système selon la revendication 2, **caractérisé en ce que** l'amplitude et la durée des paliers sont calibrables.

## Claims

1. System for diagnosis of the operation of a solenoid valve (1) installed on board a motor vehicle and provided with means (2) for copying the position of this valve, **characterized in that** it comprises means (3) for applying a test control signal to the solenoid valve (1), means (4) for acquiring the signal from the valve position copy means (2), means (4) for determining the reaction time of the solenoid valve to the test control signal, and means (5) for comparing this reaction time to a predetermined threshold value (S) in order to detect an operating fault in the solenoid valve if this threshold is crossed, and **in that** it comprises means for checking that the voltage of the battery installed on board the vehicle is correct, that the speed of vehicle is zero and that the speed of rotation of the engine is below a predetermined threshold value, in order to validate a test on the solenoid valve (1).

2. System according to Claim 1, **characterized in that** the test signal is a signal in the form of steps comprising a succession of levels of increasing and decreasing amplitude.

3. System according to Claim 2, **characterized in that** the amplitude and the duration of the steps can be calibrated.

## Patentansprüche

1. System zur Diagnose der Funktionsweise eines Elektroventils (1), das sich an Bord eines Kraftfahrzeugs befindet und das mit Mitteln (2) zu dessen Positionswiedergabe versehen ist, **dadurch gekennzeichnet, dass** es Mittel (3) zur Anlegung eines Prüfsteuerungssignals an einem Elektroventil (1), Mittel (4) zur Erfassung des Signals, das von den Mitteln (2) zu dessen Positionswiedergabe stammt, Mittel (4) zur Bestimmung der Reaktionszeit des Elektroventils auf das Prüfsteuersignal und Mittel (5) zum Vergleich dieser Reaktionszeit mit einem vorgegebenen Schwellenwert (S), um einen Funktionsfehler des Elektroventils im Falle des Überschreitens dieses Schwellenwertes aufzuspüren, aufweist, und **dadurch**, dass es Mittel zur Überprüfung aufweist, dass die Spannung der Batterie an Bord des Fahrzeugs richtig ist, dass die Geschwindigkeit des Fahrzeugs null ist und dass die Drehzahl des Motors unter einem vorgegebenen Schwellenwert liegt, um eine Prüfung des Elektroventils (1) zu bestätigen.

2. System nach Anspruch 1, **dadurch gekennzeichnet, dass** das Prüfsignal ein Stufensignal ist, das eine Aufeinanderfolge von Pegeln mit steigender und sinkender Amplitude aufweist.

3. System nach Anspruch 2, **dadurch gekennzeichnet, dass** die Amplitude und die Dauer der Stufen kalibrierbar sind.
